# FASCICULE DE BREVET EUROPEEN

(11) **EP 4 237 678 B1**
(45) Date de publication et mention de la délivrance du brevet: **27.11.2024**
(21) Numéro de dépôt: 21811116.9
(22) Date de dépôt: 29.10.2021
(51) Int. Cl.: F02K 1/04, F02K 1/80

(54) **ENSEMBLE DE TURBINE DE TURBOMACHINE**
TURBOMASCHINEN-TURBINENANORDNUNG
TURBOMACHINE TURBINE ASSEMBLY

(30) Priorité: 30.10.2020 FR 2011139
(43) Date de publication de la demande: 06.09.2023
(73) Titulaire: Safran Ceramics, 33185 Le Haillan (FR)
(72) Inventeur: CONETE, Eric, 77550 MOISSY-CRAMAYEL (FR); CARRERE, Benoit, 77550 MOISSY-CRAMAYEL (FR); VANDELLOS, Thomas, 77550 MOISSY-CRAMAYEL (FR)
(74) Mandataire: Ernest Gutmann - Yves Plasseraud S.A.S.
(86) Numéro de dépôt international: PCT/FR2021/051911
(87) Numéro de publication internationale: WO 2022/090674

(56) Documents cités:
- US-A1- 2012 160 933
- US-B2- 8 919 136

## Description

### Domaine technique

La présente divulgation se rapporte à un ensemble de turbine de turbomachine. Elle se rapporte également à une turbine comprenant un tel ensemble, à une turbomachine comprenant une telle turbine.

### Technique antérieure

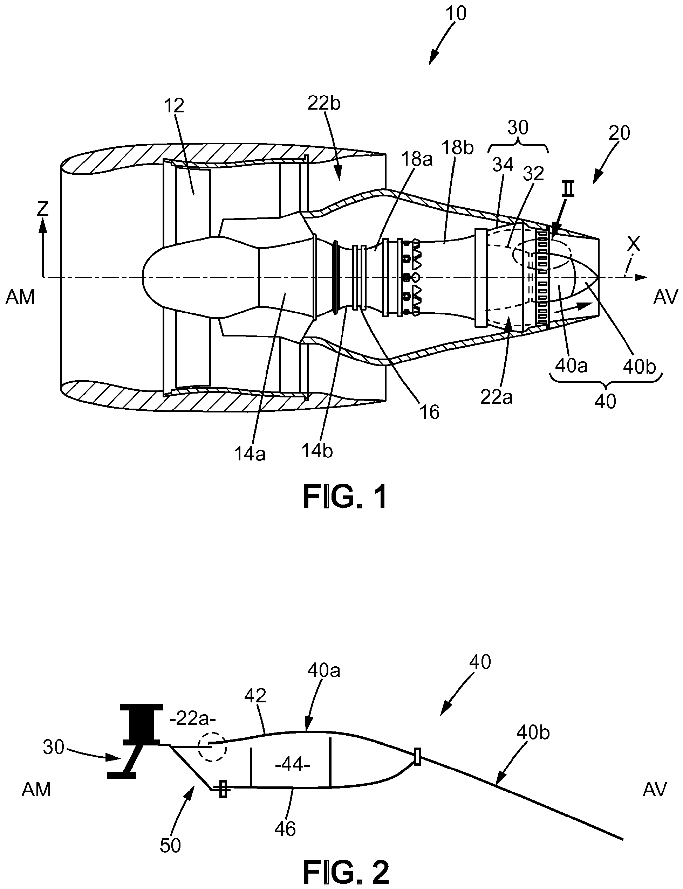

Classiquement, telle que représentée à la figure 1, une turbomachine 10 de type turboréacteur à double flux comporte, de l'amont vers l'aval dans le sens de circulation des gaz au sein de la turbomachine 10, une soufflante 12, un compresseur basse pression 14a, un compresseur haute pression 14b, une chambre de combustion 16, une turbine haute pression 18a, une turbine basse pression 18b et une tuyère d'échappement 20. Le compresseur haute-pression 14b et le compresseur basse-pression 14a sont respectivement reliés à une turbine haute-pression 18a et une turbine basse-pression 18b par un arbre respectif s'étendant selon la direction longitudinale X de rotation des arbres de la turbomachine. Dans la suite, les qualificatifs d'orientation, tels que « longitudinal », « radial » et « circonférentiel » sont définis par référence à l'axe longitudinal X.

Le flux d'air entrant dans la turbomachine est divisé, en aval de la soufflante 12, en un flux d'air annulaire primaire entrant dans une veine annulaire 22a dite primaire, et en un flux d'air annulaire secondaire, entrant dans une veine annulaire 22b dite secondaire qui entoure la veine d'air annulaire primaire 22a. Les compresseurs basse et haute pression 14a, 14b, la chambre de combustion 16 , et les turbines haute et basse pression 18a, 18b , sont situés pour les parties travaillantes dans la veine annulaire primaire 22a.

Un carter d'échappement 30 est situé directement en sortie de la turbine basse pression 18b. Le carter d'échappement 30 comprend une virole radialement interne 32 et une virole radialement externe 34. Un espace annulaire formé entre la virole interne 32 et la virole externe 34 forme une partie de la veine annulaire primaire 22a en sortie de la turbine basse pression 14b.

La tuyère d'échappement 20, ou tuyère d'éjection, d'une turbomachine 10 comporte classiquement un ensemble permettant d'optimiser l'écoulement des gaz chauds issus de la turbine. Cet ensemble peut également avoir pour fonction d'absorber au moins une partie du bruit engendré par l'interaction de ces gaz chauds avec l'air ambiant et avec le flux d'air froid issu de la soufflante.

Cet ensemble comporte un cône d'éjection 40, représenté à la figure 2, comprenant une partie amont 40a, de forme sensiblement cylindrique, et une partie aval 40b de forme conique. La partie amont 40a est formée par une paroi annulaire radialement externe 42 et un caisson acoustique 44 agencé radialement à l'intérieur de la paroi annulaire externe 42. Le caisson acoustique 44 comprend une paroi annulaire radialement interne 46. La face radialement externe de la paroi annulaire externe 42 de la partie amont 40a et la face radialement externe de la partie aval conique 40b délimitent, radialement à l'intérieur, la veine annulaire primaire 22a, au niveau du cône d'éjection 40.

Le cône d'éjection 40 est relié à l'amont au carter d'échappement 30 par un organe de liaison 50 intercalé longitudinalement entre le carter d'échappement 30 et le cône d'éjection 40. L'extrémité amont du cône d'éjection 40 est reliée à la virole interne 32 du carter d'échappement 30.

En raison des gradients de températures importants s'exerçant entre les parois annulaires interne et externe 42, 46, il est connu de découpler mécaniquement la paroi annulaire externe 42 de la paroi annulaire interne 46, à l'amontCeci a pour effet de limiter les contraintes thermomécaniques s'appliquant à la paroi annulaire externe 42. Pour ce faire, la paroi annulaire interne 46 est reliée solidairement à l'organe de liaison 50 tandis que l'extrémité amont de la paroi annulaire externe 42 est libre afin d'autoriser une libre dilation de la paroi annulaire externe 42 relativement à la paroi annulaire interne 46. Ainsi, une portion amont de la paroi annulaire externe 42 est disposée radialement en regard d'une face radialement externe de l'organe de liaison 50.

Toutefois, un tel agencement présente l'inconvénient de former un jeu radial entre la face radialement externe de l'organe de liaison 50 et la portion amont de la paroi annulaire externe 42. Ce jeu radial induit une recirculation d'air vers l'intérieur du caisson acoustique, c'est-à-dire entre les parois annulaires interne et externe 42, 46, des gaz chauds sortant de la turbine basse pression 14b au niveau de la jonction entre le carter d'échappement 30 et le cône d'éjection 40, ce qui diminue le rendement de la turbine et peut réduire l'efficacité du caisson acoustique 44.

Un autre ensemble de turbomachine selon l'art antérieur est connu du document US2012/160933 A1.

### Résumé

Il est proposé un ensemble de turbine de turbomachine d'axe longitudinal comprenant :
- un carter d'échappement,
- un cône d'éjection agencé en aval du carter d'échappement, le cône d'éjection comprenant une paroi annulaire externe d'écoulement d'un flux d'air primaire et un caisson acoustique agencé radialement à l'intérieur de ladite paroi annulaire externe, le caisson acoustique comprenant une paroi annulaire radialement interne,
- un organe de liaison intercalé longitudinalement entre le carter d'échappement et la paroi annulaire interne du cône d'éjection, l'organe de liaison étant fixé au carter d'échappement et à la paroi annulaire interne,
dans lequel l'extrémité amont de la paroi annulaire externe est reliée à l'organe de liaison avec un degré de liberté en direction radiale et un degré de liberté en direction longitudinale.

Cette proposition technologique permet de réduire les contraintes thermomécaniques de la paroi annulaire externe du cône et de la paroi annulaire interne du caisson puisque la dilatation thermique de chacune de ces deux parois peut s'effectuer de manière indépendante.

Le montage selon le présent document permet de réaliser une stabilité aérodynamique satisfaisante de l'écoulement d'air de la veine d'air primaire du fait de l'utilisation d'une liaison souple avec un degré de liberté en direction radiale et longitudinale. Ainsi, la circulation du flux d'air primaire vers un espace du caisson acoustique situé entre la paroi annulaire externe et la paroi annulaire interne est limitée, voire empêchée, au niveau de la jonction entre la paroi annulaire externe et l'organe de liaison.

Des moyens spécifiques d'étanchéité annulaire pourront être prévus entre l'organe de liaison et l'extrémité amont de la paroi annulaire externe.

L'extrémité aval de la paroi annulaire externe du cône et l'extrémité aval de la paroi annulaire aval du caisson peuvent être fixées rigidement l'une à l'autre, la dilatation thermique différentielle entre ces deux parois s'effectuant du fait du montage selon l'invention réalisée à l'amont.

L'organe de liaison peut comprendre une paroi annulaire externe comportant à son extrémité aval des moyens de liaison élastiquement déformables en direction radiale et en direction longitudinale.

La paroi annulaire externe de l'organe de liaison peut comprendre une pluralité de languettes circonférentielles, chaque languette présentant une première extrémité circonférentielle reliée à la paroi annulaire externe de l'organe de liaison et une seconde extrémité circonférentielle opposée qui est libre et qui est fixée rigidement à l'extrémité amont de la paroi annulaire externe du cône d'éjection. L'utilisation de languettes circonférentielles permet de conférer une bonne souplesse aux languettes par rapport à des languettes longitudinales tout en ayant un encombrement longitudinal réduit.

L'extrémité libre de chaque languette peut être arrondie convexe et engagée dans un évidement de forme arrondie concave de la paroi annulaire externe de l'organe de liaison.

L'extrémité amont de la paroi annulaire externe du cône peut être appliquée radialement sur une face radiale externe de l'organe de liaison. De cette manière, les languettes sont recouvertes par l'extrémité amont de la paroi annulaire externe du cône, ce qui permet de reconstituer une surface sensiblement continue sur 360° limitant les perturbations du flux d'air primaire.

L'organe de liaison peut comprendre une pluralité de pattes élastiquement déformables espacées circonférentiellement les unes des autres et fixées rigidement, par exemple par boulonnage, à l'extrémité amont de la paroi annulaire interne du caisson acoustique.

L'organe de liaison peut comprendre une première pièce annulaire et une seconde partie annulaire structurellement distinctes l'une de l'autre et fixées l'une à l'autre et au carter d'échappement, la première pièce annulaire étant celle réalisant la liaison de l'extrémité amont de la paroi annulaire externe avec l'organe de liaison avec un degré de liberté en direction radiale et un degré de liberté en direction longitudinale. La seconde pièce annulaire étant reliée à l'extrémité amont de la paroi annulaire interne du caisson acoustique.

La paroi annulaire externe et la paroi annulaire interne peuvent être chacune réalisée en un matériau composite à matrice céramique. Un tel matériau présente une faible densité et permet ainsi une réduction de la masse du cône d'éjection. Le matériau composite utilisé peut être à base carbure ou à base oxyde, avec des fibres longues ou courtes.

Selon un autre aspect, il est décrit une turbine comprenant un ensemble de turbine tel que décrit précédemment.

Selon un autre aspect, il est décrit une turbomachine comprenant une turbine telle que décrite ci-avant.

### Brève description des dessins

D'autres caractéristiques, détails et avantages apparaîtront à la lecture de la description détaillée ci-après, et à l'analyse des dessins annexés, sur lesquels :
[Fig. 1] est une demi-vue schématique partielle en coupe axiale d'une turbomachine de l'art antérieur ;
[Fig. 2] est une vue schématique à plus grande échelle de la zone de la figure 1 délimitée par des pointillés ;
[Fig. 3] est une vue schématique d'un mode de réalisation selon le présent document.

### Description des modes de réalisation

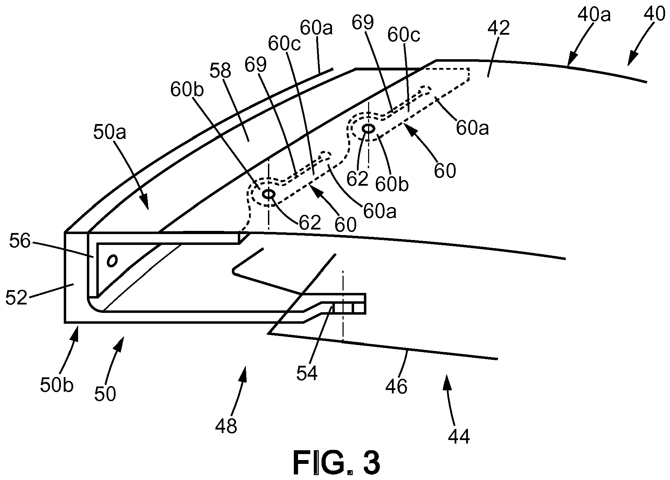

Il est maintenant fait référence à la figure 3 qui représente un ensemble 48 de turbine selon une réalisation de la présente description. Un tel ensemble de turbine peut être mis en oeuvre dans une turbomachine d'axe longitudinale comme décrit en référence à la figure 1.

L'ensemble comprend en outre un cône d'éjection 40. Le cône d'éjection 40 est agencé en aval du carter d'échappement 30 (non représenté sur la figure 3). Le cône d'éjection 40 comprend une partie amont 40a comportant une paroi annulaire externe 42 d'écoulement d'un flux d'air primaire. Le cône d'éjection comprend en outre un caisson acoustique 44 agencé radialement à l'intérieur de ladite paroi annulaire externe 42, le caisson acoustique 44 comprenant une paroi annulaire radialement interne 46. Le caisson acoustique peut comprendre une pluralité de cloisons s'étendant entre la paroi annulaire interne et la paroi annulaire externe de sorte à former une structure alvéolaire. La paroi annulaire externe 42 peut comprendre des perforations aptes à laisser pénétrer des ondes sonores à l'intérieur du caisson acoustique 44.

Les parois annulaires interne et externe 42, 46 peuvent chacune être réalisée en un matériau composite à matrice céramique. Un tel matériau présente une faible densité et permet ainsi une réduction de la masse du cône d'éjection 40. Le matériau composite utilisé peut être à base carbure ou à base oxyde, avec des fibres longues ou courtes.

L'ensemble comprend également un organe de liaison 50 intercalé longitudinalement entre le carter d'échappement 30 (non représenté) et la paroi annulaire interne 46 du cône d'éjection 40. L'organe de liaison 50 est fixé, d'une part, au carter d'échappement 30, et d'autre part, à la paroi annulaire interne 46. A cet effet, l'organe de liaison 50 comprend une bride annulaire radiale 52 fixée à la virole interne 32 du carter d'échappement 30. La bride annulaire radiale 52 peut être notamment vissée à la virole interne 32 et sur une bride annulaire en vis-à-vis longitudinal du carter d'échappement.

L'extrémité radialement interne de la bride annulaire radiale 52 est reliée à une pluralité de pattes 54 élastiquement déformables espacées circonférentiellement les unes des autres et fixées rigidement, par exemple par boulonnage, à l'extrémité amont de la paroi annulaire interne 46 du caisson acoustique 44 qui est schématiquement (figure 3).

Comme on l'observe sur la figure 3, l'organe de liaison 50 comprend une première pièce annulaire 50a et une seconde pièce annulaire 50b. La seconde pièce annulaire 50b est formée par la bride annulaire radiale 52 de fixation au carter d'échappement 30 et par les pattes souples 54. La première pièce annulaire 50a comprend une bride annulaire 56 amont fixée, par exemple par boulonnage, à la bride annulaire radiale 52 de la seconde pièce annulaire 50b.

La bride annulaire radiale 56 de la première pièce annulaire 50a est reliée à une paroi annulaire externe 58 agencée en vis-à-vis radial des pattes souples 54 de la seconde pièce annulaire 50b.

La partie aval de la paroi annulaire externe 58 de la première pièce 50a comprend des moyens élastiquement déformables en direction radiale et en direction longitudinale. Dans l'exemple particulier illustré en figure 3, ces moyens comprennent des languettes 60 circonférentielles. Chaque languette 60 comprend une première extrémité 60a circonférentielle reliée à la paroi annulaire externe 58 de l'organe 50 de liaison et une seconde extrémité 60b circonférentielle opposée qui est libre et qui est fixée rigidement à l'extrémité amont de la paroi annulaire externe 42 du cône d'éjection 40.

Les bords aval des languettes 60 circonférentielles sont alignées circonférentiellement. Chaque languette 60 comprend un corps 60c allongé en direction circonférentielle délimitant avec la paroi annulaire externe 58 une fente 69 permettant la déformation de la languette 60. La seconde extrémité circonférentielle 60b présente une forme périphérique arrondie convexe qui est engagée dans un évidement de forme correspondante arrondie concave de la paroi annulaire externe 58 de la première pièce 50a de l'organe de liaison 50. La seconde extrémité 60b de chaque languette 60 circonférentielle comprend un orifice 62 destiné au passage d'une vis de fixation à l'extrémité amont de la paroi annulaire externe 42 du cône 40. L'extrémité amont de la paroi annulaire externe 42 du cône 40 est ici appliquée radialement sur une face radiale externe de la paroi annulaire externe 58 de la première pièce annulaire 50a de l'organe de liaison 50.

Selon la configuration proposée, l'extrémité amont de la paroi annulaire externe 42 est ainsi reliée à l'organe de liaison 50 avec un degré de liberté en direction radiale et un degré de liberté en direction longitudinale.

L'ensemble décrit précédemment permet de réaliser un découplage de la paroi annulaire externe 42 du cône 40 et de la paroi annulaire interne 46 du caisson acoustique 44, ces deux parois n'étant plus fixée l'une à l'autre, ce qui autorise les dilatations différentielles entre lesdites deux parois en direction radiale et longitudinale, permettant ainsi de réduire les contraintes thermomécaniques lors de l'application du gradient thermique radial à l'ensemble 48 selon le présent document. Par ailleurs, la stabilité aérodynamique de la jonction entre l'organe de liaison 50 et la paroi annulaire externe 42 du cône 40 est assurée du fait de l'étanchéité partielle et de la tenue sous chargement mécanique de la paroi annulaire externe 42 du cône 40.

## Revendications

1. Ensemble (48) de turbine de turbomachine d'axe longitudinal comprenant :
- un carter d'échappement (30),
- un cône d'éjection (40) agencé en aval du carter d'échappement (30), le cône d'éjection (40) comprenant une paroi annulaire externe (42) d'écoulement d'un flux d'air primaire et un caisson acoustique (44) agencé radialement à l'intérieur de ladite paroi annulaire externe (42), le caisson acoustique (44) comprenant une paroi annulaire radialement interne (46),
- un organe de liaison (50) intercalé longitudinalement entre le carter d'échappement (30) et la paroi annulaire interne (46) du cône d'éjection (40), l'organe de liaison (50) étant fixé au carter d'échappement (30) et à la paroi annulaire interne (46),
**caractérisé en ce que** l'extrémité amont de la paroi annulaire externe (42) est reliée à l'organe de liaison (50) avec un degré de liberté en direction radiale et un degré de liberté en direction longitudinale.

2. Ensemble (48) selon la revendication 1, dans lequel l'organe de liaison (50) comprend une paroi annulaire externe (58) comportant à son extrémité aval des moyens (60) de liaison élastiquement déformables en direction radiale et en direction longitudinale.

3. Ensemble selon la revendication 2, dans lequel la paroi annulaire externe (58) de l'organe (50) de liaison comprend une pluralité de languettes (60) circonférentielles, chaque languette (60) présentant une première extrémité circonférentielle (60a) reliée à la paroi annulaire externe (58) de l'organe (50) de liaison et une seconde extrémité circonférentielle (60b) opposée qui est libre et qui est fixée rigidement à l'extrémité amont de la paroi annulaire externe (42) du cône (40) d'éjection.

4. Ensemble selon la revendication 3, dans lequel l'extrémité libre de chaque languette (60) est arrondie convexe et est engagée dans un évidement de forme arrondie concave de la paroi annulaire externe (42) de l'organe (50) de liaison.

5. Ensemble selon l'une des revendications 1 à 4, dans lequel l'organe (50) de liaison comprend une pluralité de pattes (54) élastiquement déformables espacées circonférentiellement les unes des autres et fixées rigidement, par exemple par boulonnage, à l'extrémité amont de la paroi annulaire interne (46) du caisson acoustique (44).

6. Ensemble selon l'une des revendications 1 à 5, dans lequel l'extrémité amont de la paroi annulaire externe (42) du cône (40) est appliquée radialement sur une face radiale externe de l'organe (50) de liaison.

7. Turbine comprenant un ensemble de turbine selon l'une quelconques des revendications précédentes.

## Patentansprüche

1. Turbinenanordnung (48) für Turbotriebwerke mit einer Längsachse, umfassend:
- ein Auslassgehäuse (30),
- einen stromabwärts des Auslassgehäuses (30) angeordneten Ausstoßkegel (40), wobei der Ausstoßkegel (40) eine äußere ringförmige Wand (42) für die Strömung eines Primärluftstroms und einen radial innerhalb der äußeren ringförmigen Wand (42) angeordneten Schallkasten (44) umfasst, wobei der Schallkasten (44) eine radial innere ringförmige Wand (46) umfasst,
- ein Verbindungsglied (50), das in Längsrichtung zwischen dem Auslassgehäuse (30) und der inneren ringförmigen Wand (46) des Ausstoßkegels (40) angeordnet ist, wobei das Verbindungsglied (50) an das Auslassgehäuse (30) und an die innere ringförmigen Wand (46) befestigt ist,
**dadurch gekennzeichnet, dass** das stromaufwärtige Ende der äußeren ringförmigen Wand (42) mit dem Verbindungsglied (50) mit einem Freiheitsgrad in radialer Richtung und einem Freiheitsgrad in Längsrichtung verbunden ist.

2. Anordnung (48) nach Anspruch 1,
wobei das Verbindungsglied (50) eine äußere ringförmige Wand (58) umfasst, die an ihrem stromabwärtigen Ende Verbindungsmittel (60) aufweist, die in radialer Richtung und in Längsrichtung elastisch verformbar sind.

3. Anordnung nach Anspruch 2,
wobei die äußere ringförmige Wand (58) des Verbindungsglieds (50) eine Vielzahl von umlaufend angeordneten Zungen (60) umfasst, wobei jede Zunge (60) ein erstes Umfangsende (60a), das mit der äußeren ringförmigen Wand (58) des Verbindungsglieds (50) verbunden ist, und ein entgegengesetztes zweites Umfangsende (60b) aufweist, das frei liegt und starr an das stromaufwärtige Ende der äußeren ringförmigen Wand (42) des Ausstoßkonus (40) befestigt ist.

4. Anordnung nach Anspruch 3,
wobei das freiliegende Ende jeder Zunge (60) konvex abgerundet ist und in eine konkav abgerundete Aussparung der äußeren ringförmigen Wand (42) des Verbindungsglieds (50) eingreift.

5. Anordnung nach einem der Ansprüche 1 bis 4,
wobei das Verbindungsglied (50) eine Vielzahl von elastisch verformbaren Laschen (54) umfasst, die in Umfangsrichtung voneinander beabstandet sind und starr, beispielsweise durch Verschraubung, an das stromaufwärtige Ende der inneren ringförmigen Wand (46) des Schallkastens (44) befestigt sind.

6. Anordnung nach einem der Ansprüche 1 bis 5,
wobei das stromaufwärtige Ende der äußeren ringförmigen Wand (42) des Konus (40) radial an einer radial äußeren Fläche des Verbindungsglieds (50) angebracht ist.

7. Turbine mit einer Turbinenanordnung nach einem der vorhergehenden Ansprüche.

## Claims

1. Turbomachine turbine assembly (48) with a longitudinal axis comprising:
- an exhaust casing (30),
- an ejection cone (40) arranged downstream of the exhaust casing (30), the ejection cone (40) comprising an outer annular wall (42) for the flow of a primary air stream and an acoustic box (44) arranged radially inside said outer annular wall (42), the acoustic box (44) comprising a radially inner annular wall (46),
- a connection member (50) interposed longitudinally between the exhaust casing (30) and the inner annular wall (46) of the ejection cone (40), the connection member (50) being fastened to the exhaust casing (30) and to the inner annular wall (46),
**characterized in that** the upstream end of the outer annular wall (42) is connected to the connection member (50) with a degree of freedom in the radial direction and a degree freedom in the longitudinal direction.

2. Assembly (48) according to claim 1, wherein the connection member (50) comprises an outer annular wall (58) including at its downstream end connecting means (60) elastically deformable in the radial direction and in the longitudinal direction.

3. Assembly according to claim 2, wherein the outer annular wall (58) of the connection member (50) comprises a plurality of circumferential tabs (60), each tab (60) having a first circumferential end (60a) connected to the outer annular wall (58) of the connection member (50) and an opposite second circumferential end (60b) which is free and which is rigidly fastened at the upstream end of the outer annular wall (42) of the ejection cone (40).

4. Assembly according to claim 3, wherein the free end of each tab (60) is convexly rounded and is fitted in a recess with a concavely rounded shape of the outer annular wall (42) of the connection member (50).

5. Assembly according to one of claims 1 to 4, wherein the connection member (50) comprises a plurality of elastically deformable lugs (54) spaced apart circumferentially from each other and rigidly fastened, for example by bolting, at the upstream end of the inner annular wall (46) of the acoustic box (44).

6. Assembly according to one of claims 1 to 5, wherein the upstream end of the outer annular wall (42) of the cone (40) is applied radially over an outer radial face of the connection member (50).

7. Turbine comprising a turbine assembly according to any one of the preceding claims.
